# EUROPEAN PATENT APPLICATION

(11) **EP 2 682 030 A2**
(43) Date of publication of application: **08.01.2014**
(21) Application number: 12752511.1
(22) Date of filing: 02.03.2012
(51) Int. Cl.: A47J 36/06, A47J 27/08

(54) **POT LID CAPABLE OF PREVENTING FOOD FROM BOILING OVER**

(30) Priority: 03.03.2011 KR 20110018795; 16.11.2011 KR 20110119883; 09.02.2012 KR 20120013104
(71) Applicant: Oh, Jae-Tak, Bucheon-si, Gyeonggi-do 420-140 (KR)
(72) Inventor: Oh, Jae-Tak, Bucheon-si, Gyeonggi-do 420-140 (KR)
(74) Representative: Groth & Co. KB
(86) International application number: PCT/KR2012/001561
(87) International publication number: WO 2012/118339

(57) **Abstract**

An anti-overflow pot lid is provided, including: a lid body configured to be curved to protrude, and to cover an opening of a pot body; a recessed portion configured to be recessed downward from the lid body; one or more inlet holes configured to be formed at an upper part of the recessed portion and let in steam generated in the pot body; and one or more outlet holes configured to be formed at a lower part of the recessed portion and let out water drops obtained by liquefying the steam into the pot body. The anti-overflow pot lid can effectively prevent rattling and spillage or leakage. In addition, the anti-overflow pot lid has an element with a simple structure for preventing spillage or leakage, and can thus minimize an increase in the manufacturing cost thereof. Moreover, the anti-overflow pot lid can allow food to be cooked under high pressure and address the problem of water loss during cooking by preventing excessive steam release and excessive water evaporation. Furthermore, since the recessed portion is removable from the lid body, the recessed portion can be easily cleaned, and hygienically maintained.

## Description

### Technical Field

The present invention relates to a pot lid that covers the opening of a pot body, and more particularly, to an anti-overflow pot lid, which does not much rattle during cooking and is capable of preventing an overflow of food in the body of a pot by allowing steam generated in the pot body during cooking to condense into water to water and releasing the water into the pot body so as to remove any bubbles that may rise up to the top of the pot body and to lower the temperature and the steam pressure in the pot body.

### Background Art

Pots are containers for food for use in cooking, and generally include a pot body in which to contain food to be cooked and a lid covering the opening of the pot body.

When the pot body is heated, the food in the pot body boils and simmers, steam is generated, and even bubbles are generated depending on the type of the food.

The steam increases the steam pressure in the pot body so that the lid may rattle. As a result, boiling food and bubbles in the pot body may overflow through the gap between the rattling pot lid and the opening of the pot body, thereby dirtying the pot body and the surroundings.

One of the main reasons that the lid rattles and food in the pot body overflows is an increase in the steam pressure in the pot body.

To address the problems associated with an increase in steam pressure, one or more holes that let steam out of the pot body may be provided at the lid.

More specifically, an appropriate number of holes having an appropriate size may be provided at the lid such that steam generated inside the pot body can be properly released so as to prevent rattling and spillage during cooking.

However, the appropriate number and size of such holes may vary depending on the type and amount of food to be cooked in the pot body. Accordingly, it is almost impossible to provide holes that are appropriate for every pot lid in terms of size and quantity.

Most of the related-art pot lids are equipped with a hole enlarging element capable of adjusting the size of holes by being lifted or lowered in accordance with the steam pressure inside a pot body, as shown in Korean Utility Model No. 4211341, Korean Utility Model No. 419066 and Korean Patent No. 6981196, entitled "A Cooker Lid with Prevent Overflowing of Foods", "The Overflow Preventing Lid for Cook Pot" and "The Pot Lid for Preventing Overflow", respectively.

However, such hole enlarging element generally has a complicated structure, thereby increasing the manufacturing cost of a pot lid while appear less cost-effective.

Also, there is a limit in enlarging the size of holes of a pot lid with the use of a hole enlarging element. Also, once steam is quickly released from a pot by enlarging the size of holes with the aid of a hole enlarging element, the pressure inside the pot body may no longer be maintained to be high and may thus become inappropriate for recipes requiring high-pressure cooking. In addition, water may too often need to be added into the pot due to excessive water evaporation during cooking.

### Technical Problems

To address the aforementioned problems associated with the related art, the present invention aims at providing an anti-overflow pot lid which is capable of minimizing an increase in the manufacturing cost thereof by simplifying the structure of an element thereof for preventing a pot lid rattling and spillage or leakage and is also capable of preventing excessive steam release and excessive water evaporation during cooking and enabling food to be cooked under high pressure by allowing steam generated in the pot to condense to water and releasing the water into the pot body, without the need to change the number and size of existing outlet holes thereof.

The present invention also aims at providing an improved, anti-overflow pot lid which has a recessed portion configured to be removable from a lid body and can thus be easily cleaned and hygienically maintained.

### Technical Solutions

According to an aspect, an anti-overflow pot lid includes: a lid body configured to be curved to protrude, and to cover an opening of a pot body; a recessed portion configured to be recessed downward from the lid body; one or more inlet holes configured to be formed at an upper part of the recessed portion and let in steam generated in the pot body; and one or more outlet holes configured to be formed at a lower part of the recessed portion and let out water drops obtained by liquefying the steam into the pot body.

The recessed portion may be formed by forming a steam vent hole at the center of the lid body, a further-recessed portion may be formed below the recessed portion to collect water condensed from steam therein, and the outlet holes may be formed at the further-recessed portion.

The recessed portion may be formed in the shape of a jar with a larger diameter in the middle than at the top or the bottom thereof.

According to another aspect, an anti-overflow pot lid includes: a lid body configured to be curved to protrude, and to cover an opening of a pot body; a first protrusion configured to protrude from the top of the lid body 10 and have a steam vent hole formed at the top thereof; a second protrusion configured to be formed in an L shape and protrude from the lid body within the vicinity of the first protrusion; an inlet hole configured to be formed at an upper part of the second protrusion and guide steam generated in the pot body into the first protrusion; and an outlet hole configured to be formed through the lid body and release water condensed from the steam into the pot body.

According to another aspect, an anti-overflow pot lid includes: a lid body configured to be curved to protrude, and to cover an opening of a pot body; a protrusion configured to protrude from the top of the center of the lid body, form a ring-shaped space therein and include a central space surrounded by the ring-shaped space and a steam vent hole formed at the top of the central space; a plurality of inlet holes configured to be formed on an inner sidewall of the protrusion that forms the ring-shaped space, and guide steam generated in the pot body into the central space; and an outlet hole configured to be formed through the lid body at the bottom of the central space and release water in the central space into the pot body.

According to another aspect, an anti-overflow pot lid includes: a lid body configured to be curved to protrude, and to cover an opening of a pot body; a steam vent hole configured to be formed through the center of the lid body; a stopping board configured to have an outer rim that engages with an extended rim of the pot body so as to be able to be held and supported by the pot body; an inlet hole configured to be formed to vertically penetrate the stopping board and guide steam generated in the pot body into the space above the stopping board; and an outlet hole configured to be formed to vertically penetrate the stopping board and release water condensed from the steam into the pot body.

According to another aspect, an anti-overflow pot lid includes: a lid body configured to be curved to protrude, and to cover an opening of a pot body;
a recessed portion configured to be recessed into the lid body; an inlet hole configured to be formed at an upper part of the recessed portion and let in steam generated in the pot body; and an outlet hole configured to be formed at a lower part of the recessed portion and let out water condensed from the steam into the pot body, wherein the recessed portion is formed by forming a steam vent hole at the center of the lid body, a further-recessed portion is formed below the recessed portion to collect water condensed from steam therein, the outlet hole is formed at the further-recessed portion, the recessed portion is formed in the shape of a jar with a larger diameter in the middle than at the top or the bottom thereof, the anti-overflow pot lid further comprises an engaging portion configured to be formed along the rim of the lid body and engage with the pot body by being inserted into the pot body, and a silicon packing configured to be provided at the engaging portion and have an expansion space therein that thermally expands.

According to another aspect, an anti-overflow pot lid includes: a lid body configured to be curved to protrude, and to cover an opening of a pot body;
a recessed portion configured to be recessed into the lid body; an attachment/detachment unit configured to removably couple and fix an upper rim of the recessed portion to the lid body; an inlet hole configured to be formed at an upper part of the recessed portion and let in steam generated in the pot body; and an outlet hole configured to be formed at a lower part of the recessed portion and release water condensed from the steam into the pot body.

According to another aspect, an anti-overflow pot lid includes: a lid body configured to be curved to protrude, and to cover an opening of a pot body; a first recessed portion configured to be formed below the lid body and include a first inlet hole which is formed at an upper part of the first recessed portion and through which steam is introduced in the first recessed portion and a first outlet hole which is formed at the bottom of the first recessed portion and through which water condensed from the steam is released from the first recessed portion; a first attachment/detachment unit configured to be provided at the top of the first recessed portion and removably couple and fix an upper rim of the first recessed portion to the lid body; a second recessed portion configured to surround the first recessed portion and include a second inlet hole which is formed at an upper part of the second recessed portion and through which steam generated in the pot body is introduced into the second recessed portion and a second outlet hole which P is formed at the bottom of the second recessed portion and through which water condensed from the steam is released into the pot body; and a second attachment/detachment unit configured to be provided at the top of the second recessed portion and removably couple and fix an upper rim of the second recessed portion to the first recessed portion.

According to another aspect, an anti-overflow pot lid includes: a lid body configured to be curved to protrude, and to cover an opening of a pot body; a first recessed portion configured to be recessed into the center of the lid body and include a first outlet hole which is formed on one side of the first recessed portion; an auxiliary lid configured to be formed to protrude from the top of the first recessed portion and include a first inlet hole which is formed on one side of the auxiliary lid; a first attachment/detachment unit configured to removably couple a lower rim of the auxiliary lid to the center of the first recessed portion; a second recessed portion configured to surround the first recessed portion and include a second inlet hole which is formed at an upper part of the second recessed portion and through which steam generated in the pot body is introduced into the second recessed portion and a second outlet hole which is formed at the bottom of the second recessed portion and through which water condensed from the steam is released into the pot body; and a second attachment/detachment unit configured to removably couple and fix the second recessed portion to the first recessed portion.

According to another aspect, an anti-overflow pot lid includes: a lid body configured to be curved to protrude, and to cover an opening of a pot body; a first recessed portion configured to be recessed into the center of the lid body and include a first outlet hole which is formed on a side of the first recessed portion; an auxiliary lid configured to be disposed at the center of the first recessed portion, include a first inlet hole which is formed on a side of the auxiliary lid, and protrude from the top of the first recessed portion; a first attachment/detachment unit configured to removably couple a lower rim of the auxiliary lid to the center of the first recessed portion; a second recessed portion configured to be disposed below the first recessed portion and include a second inlet hole which is formed at an upper part of the second recessed portion and through which steam generated in the pot body is introduced into the second recessed portion and a second outlet hole which is formed at the bottom of the second recessed portion and through which water condensed from the steam is released into the pot body; and a second attachment/detachment unit configured to removably couple and fix an upper rim of the second recessed portion to the first recessed portion.

According to another aspect, an anti-overflow pot lid includes: a lid body configured to be curved to protrude, and to cover an opening of a pot body; an upper recessed portion configured to be recessed into the center of the lid body; a lower recessed portion configured to be disposed below the upper recessed portion and include a plurality of inlet holes which are formed at an upper part of the lower recessed portion and through which steam generated in the pot body is introduced into the lower recessed portion and an outlet hole which is formed at the bottom of the lower recessed portion and through which water condensed from the steam is released into the pot body; an attachment/detachment unit configured to removably couple and fix an upper rim of the lower recessed portion to the upper recessed portion; and a rotation unit configured to include a plurality of wings which are rotated by steam introduced into the lower recessed portion through the inlet holes and a screw which is rotated by the rotation force of the wings and pushes any water in the lower recessed portion toward the outlet hole so as for the water to be discharged.

### Advantageous Effects

The anti-overflow pot lid according to the present invention can effectively prevent rattling and spillage or leakage. In addition, the anti-overflow pot lid according to the present invention has an element with a simple structure for preventing spillage or leakage, and can thus minimize an increase in the manufacturing cost thereof. Moreover, the anti-overflow pot lid according to the present invention can allow food to be cooked under high pressure and address the problem of water loss during cooking by preventing excessive steam release and excessive water evaporation. Furthermore, since the anti-overflow pot lid according to the present invention is equipped with a recessed portion removable from the lid body thereof, the recessed portion can be easily cleaned, and hygienically maintained.

### Description of Drawings

The accompanying drawings, which are included to provide a further understanding of the invention and are incorporated in and constitute a part of this specification, illustrate embodiments of the invention, and together with the description serve to explain the principles of the invention.
FIG. 1 is a perspective view illustrating an anti-overflow pot lid according to an embodiment.
FIG. 2 is a cross-sectional view illustrating the anti-overflow pot lid of FIG. 1.
FIG. 3 is a cross-sectional view illustrating how to couple the anti-overflow pot lid of FIG. 1 to a pot body.
FIGS. 4 and 5 are cross-sectional view of examples of a recessed portion of the anti-overflow pot lid of FIG. 1.
FIGS. 6 to 8 are cross-sectional view of other examples of the recessed portion of the anti-overflow pot lid of FIG. 1.
FIGS. 9 and 10 are cross-sectional view of examples of a protrusion that can be provided at the anti-overflow pot lid of FIG. 1.
FIG. 11 is a cross-sectional view illustrating an anti-overflow pot lid with a stopping board, according to an embodiment.
FIGS. 12 and 13 are cross-sectional views illustrating examples of the stopping board.
FIGS. 14 and 15 are cross-sectional views illustrating other examples of the stopping board.
FIG. 16 is a perspective view illustrating an anti-overflow pot lid having a steam vent hole with a cover, according to an embodiment.
FIG. 17 is a cross-sectional view illustrating the anti-overflow pot lid of FIG. 16.
FIGS. 18 and 19 are cross-sectional views illustrating an anti-overflow pot lid with a vertical array of a plurality of inlet/outlet holes, according to an embodiment.
FIGS. 20 and 21 are cross-sectional views illustrating an anti-overflow pot lid having an elevatable stopper formed in an outlet hole thereof so as to be able to open or close the outlet hole by elevating or lowering the elevatable stopper in the outlet hole, according to an embodiment.
FIG. 22 is a cross-sectional view illustrating an anti-overflow pot lid with a removable recessed portion, according to an embodiment.
FIG. 23 is a cross-sectional view illustrating an anti-overflow pot lid with a removable recessed portion and an elevatable stopper, according to an embodiment
FIG. 24 is a cross-sectional view illustrating an anti-overflow pot lid with a removable recessed portion and an elevatable stopper, according to another embodiment.
FIG. 25 is a cross-sectional view illustrating an anti-overflow pot lid with a removable recessed portion and a stopping board, according to an embodiment.
FIG. 26 is a cross-sectional view illustrating an anti-overflow pot lid with a removable recessed portion and a vertical array of a plurality of inlet/outlet holes, according to an embodiment.
FIG. 27 is a cross-sectional view illustrating an anti-overflow pot lid with a removable recessed portion, a vertical array of a plurality of inlet/outlet holes and a plurality of elevatable stoppers for the plurality of inlet/outlet holes, according to an embodiment.
FIG. 28 is a cross-sectional view illustrating an anti-overflow pot lid with a plurality of removable recessed portions and a plurality of elevatable stoppers, according to an embodiment.
FIG. 29 is a cross-sectional view illustrating an anti-overflow pot lid with an auxiliary lid removable from a recessed portion thereof and a plurality of elevatable stoppers, according to an embodiment;
FIG. 30 is a cross-sectional view illustrating an anti-overflow pot lid with an auxiliary lid removable from a recessed portion thereof and a plurality of elevatable stoppers, according to another embodiment;
FIG. 31 is a cross-sectional view illustrating an anti-overflow pot lid with a removable recessed portion and a rotation unit including wings and a screw, according to an embodiment; and
FIG. 32 is a cross-sectional view illustrating an anti-overflow pot lid with a removable recessed portion and a rotation unit including wings and a screw, according to an embodiment.

### Mode for Invention

The present invention will hereinafter be described with the accompanying drawings.

Referring to the accompanying drawings, an anti-overflow pot lid L according to an embodiment includes a lid body 10, a recessed portion 20, one or more inlet holes 30, one or more outlet holes 40, a further-recessed portion 21, an engaging portion 11 and a silicon packing 50.

The lid body 10 covers and thus closes the opening of a pot body P. During cooking, the lid body 10 maintains both the temperature and the pressure inside the pot body P to be high, and prevents excessive steam release.

The lid body 10 may be formed of a transparent material such as tempered glass so as for a user to easily identify the progress of cooking from inside the pot body P.

The lid body 10 is formed to be curved and protrude. The lid body 10 except for the rim thereof is located higher than the pot body P when coupled to the pot body P. Accordingly, the inner surface of the lid body 10 can be prevented from collisions with boiling food (such as water or food materials mixed in water) from the pot body P.

The lid body 10 may guide steam and bubbles generated in the pot body P during cooking toward the center of the inside of the lid body 10 so that the pressure applied to the rim of the anti-overflow pot lid L by the steam and bubbles can decrease while preventing the steam and bubbles from leaking through the gap between the lid body 10 and the pot body P.

The recessed portion 20 is recessed downward form the center of the lid body 10 and forms an empty space therein. The inlet holes 30 and the outlet holes 40 are formed at upper and lower parts, respectively, of the recessed portion 20. The inlet holes 30 and the outlet holes 40 receive and temporarily store therein steam generated in the pot body P, and let out water obtained by condensing the steam into the pot body P.

Since the recessed portion 20 is formed at the center of the lid body 10, steam or bubbles generated during cooking can be easily guided into the recessed portion 20 along a curved inner surface of the lid body 10 or through the inlet holes 30.

The steam or bubbles guided into the recessed portion 20 are released into the pot body P. As a result, the pressure applied to the rim of the lid body 10, which is coupled to the pot body P, decreases. Accordingly, the rattling of the anti-overflow pot lid L can be prevented.

When the pressure applied to the rim of the anti-overflow pot lid L is not uniformly maintained, the rim of the anti-overflow pot lid L may be lifted in areas where the pressure from the inside of the pot body P is relatively low. In this case, the anti-overflow pot lid L may rattle. However, since the recessed portion 20 is formed at the center of the lid body 10 such that steam condensed therein can be released into the middle of the pot body P, certain parts of the rim of the lid body 10 can be prevented from being affected more than other parts of the rim of the lid body 10 by the steam from the pot body P, and thus, the pressure applied to the rim of the lid body 10 can be uniformly maintained.

The bottom of the recessed portion 20 is located above an imaginary line connecting either side of the rim of the lid body 10. For example, when the lid body 10 is coupled to the pot body P, the bottom of the recessed portion 20 may be located outside the pot body P.

The recessed portion 20, which is a space for receiving and temporarily storing therein steam generated in the pot body P, may be formed in various shapes. For example, the recessed portion 20 may be formed in the shape of a jar with a larger diameter in the middle than at the top or the bottom thereof.

According to this embodiment, steam introduced from the pot body P into the recessed portion 20 contacts external air and thus condenses into water, instead of being released to the outside, and the water with a lower temperature than the steam in the pot body P is released back into the pot body P, thereby preventing the rattling of the anti-overflow pot lid L or overflow of food from the pot body P. To minimize the release and removal of steam from the pot body P, the recessed portion 20 may be formed in such a shape to discharge steam introduced thereinto downwardly.

For this reason, the recessed portion 20 may be formed in the shape of a jar, and the inlet holes 30 may be formed at an upper part of the recessed portion 20 to face downward.

Not only steam but also bubbles may be introduced into the recessed portion 20 through the inlet holes 30. Some bubbles may readily pop and turn into water, but some bubbles may remain unpopped for a long time even after introduced into the recessed portion 20, depending on their characteristics (such as viscosity).

If more and more bubbles remain unpopped, rather than turning into water, after introduced in the recessed portion 20, the recessed portion 20 may be flooded with the bubbles.

To address this problem, the recessed portion 20 may be formed in the shape of a jar with a larger diameter in the middle than at the top and the bottom thereof such that as large a space as possible can be secured in the recessed portion 20, and that the flooding of the recessed portion 20 with bubbles can be delayed.

The further-recessed portion 21 is formed at the bottom of the recessed portion 20 to face downward. The outlet holes 40 are formed at the further-recessed portion 21.

Water condensed in the recessed portion 20 is gathered in the further-recessed portion 21, and the gathered water can be released into the pot body P through the outlet holes 40 at the same time.

Without the further-recessed portion 21 at the bottom of the recessed portion 20, the outlet holes 40 are likely to be blocked by bubbles from the pot body P, and as a result, water condensed in the recessed portion 20 may not be able to be properly released into the pot body P through the outlet holes 40. However, if the further-recessed portion 21 is provided at the bottom of the recessed portion 20, the outlet holes 40 can be prevented from being blocked by bubbles from the pot body P, and condensed steam in the recessed portion 20 can be smoothly released into the pot body P through the outlet holes 40.

The inlet holes 30 and the outlet holes 40 are formed at upper and lower parts, respectively, of the recessed portion 20. The inlet holes 30 and the outlet holes 40 receive steam from the pot body P, and release condensed water into the pot body P.

Steam introduced into the recessed portion 20 through the inlet holes 30 condenses into water, and at the same time, the temperature of the steam decreases. The temperature of the condensed steam is about 1 to 2 degrees lower than the steam in the pot body P.

In response to the condensed steam with a relatively low temperature being released into the pot body P, bubbles in the pot body pop and thus disappear, and the temperature of the steam at the top of the pot body P decreases so that the steam pressure in the pot body P decreases. Accordingly, the rattling of the anti-overflow pot lid L or spillage of food through the gap between the anti-overflow pot lid L and the pot body P can be prevented.

The outlet holes 40 may be formed at the bottom of the recessed portion 20 so as to smoothly release water from the recessed portion 20. However, there is a risk of the outlet holes 40 being clogged by boiling food from the pot body P.

To address this problem, the outlet holes 40 may be formed at a location that cannot be easily reached by boiling food from the pot body P. For example, the outlet holes 40 may be formed on a lateral surface of the further-recessed portion 21.

The engaging portion 11 is formed along the rim of the lid body 10. The engaging portion 11 has a lower part that is to be inserted into the pot body P and an upper part that is to engage with the rim of the opening of the pot body P. The silicon packing 50 is coupled to the engaging portion 11, and can be placed in firm contact with the inner surface of the pot body P.

The engaging portion 11 is formed in the form of a frame that surrounds the rim of the lid body 10. A groove 12 in which to receive the silicon packing 50 is formed on a portion of the engaging portion 11 to be inserted into the pot body P.

An expansion space 51 is formed inside the silicon packing 50.

The expansion space 51 is filled with a gas with a high volumetric thermal expansion ratio. For example, the expansion space 51 may be filled with air.

The outer diameter of the silicon packing 50, which is coupled to the engaging portion 11, is less than the inner diameter of the pot body P. Accordingly, the anti-overflow pot lid L can be easily coupled to the pot body P without any hindrance from the silicon packing 50.

During cooking, in response to the silicon packing 50 being heated due to an increase in the temperature inside the pot body P, the expansion space 51 expands such that the outer diameter of the silicon packing 50 may become greater than the inner diameter of the pot body P. Accordingly, the silicon packing 50 can be firmly attached onto the inner surface of the pot body P with no gap therebetween, and thus, the rattling of the anti-overflow pot lid L can be prevented.

If the air pressure inside the pot body P is increased with the use of the engaging portion 11, bubbles in the pot body P can be easily popped and removed.

That is, boiling water in the pot body P means that the air pressure in the pot body P is equal to the external air pressure.

In general, the air pressure on the ground surface is about 1 atm, and water boils at a temperature of 100°C. However, in the mountains where the air pressure is lower than on the ground surface, water boils at a temperature of below 100°C.

In response to the water beginning to boil in the pot body P due to an increase in the temperature in the pot body P, bubbles are generated. Since the bubbles dissolve into the contents of the pot body P and thus have viscosity, they stay longer than the water in the pot body P.

In the case of an ordinary pot, there is not much difference in pressure between the inside and the outside of the pot, and thus, bubbles from the pot do not easily pop even when overflowing out of the pot.

On the other hand, when the anti-overflow pot lid L is firmly coupled to the pot body P through the engaging portion 11, the pressure in the pot body P can be increased to above 1 atm in accordance with an increase in the steam pressure inside the pot body P, and the boiling temperature of water in the pot body P can become higher than 100°C. For example, the pressure and the boiling temperature of water in a pressure cooker may become higher than 1.2 atm and 120°C, respectively.

That is, water in the pot body P may boil at a temperature higher than 100 °C, and bubbles may be generated at a pressure of at least 1 atm. Most of the bubbles may pop and may all turn into steam due to a difference in pressure between the inside and outside of the anti-overflow pot lid L near the inlet holes 30 and the outlet holes 40.

Accordingly, since the pressure inside the pot body can be increased due to the presence of the engaging portion 11, bubbles generated in the pot body P can be easily removed.

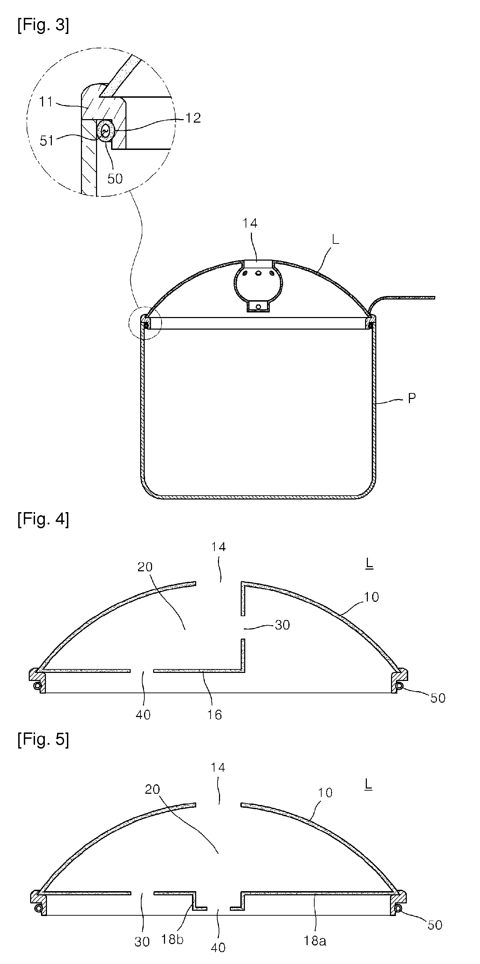

The anti-overflow pot lid L may have a modified structure, as illustrated in FIG. 4.

That is, referring to FIG. 4, a recessed portion 20 may be formed by forming a partition 16 which divides the space in a lid body 10. The partition 16 is formed in the lid body 10, and an inlet hole 30 is formed on a vertical wall of the partition 16. Steam and bubbles generated during cooking are introduced into the recessed portion 20 through the inlet hole 30.

An outlet hole 40 is formed at the bottom of the partition 16. Steam introduced into the recessed portion 20 through the inlet hole 30 condenses into water and drops into the pot body P through the outlet hole 40.

A steam vent hole 14 is formed through the lid body 10 in which the recessed portion 20 is formed, so that steam can be released to the outside of the lid body 10 through the steam vent hole 14.

The anti-overflow pot lid L may have another modified structure, as illustrated in FIG. 5.

Referring to FIG. 5, a recessed portion 20 may be formed by forming a first partition 18a which extends horizontally across the space in the lid body 10, and a second partition 18b which is formed as a recess into the first partition 18a.

An inlet hole 30 is formed as a through hole that vertically penetrates the first partition 18a, and an outlet hole 40 is formed at the bottom of the second partition 18b.

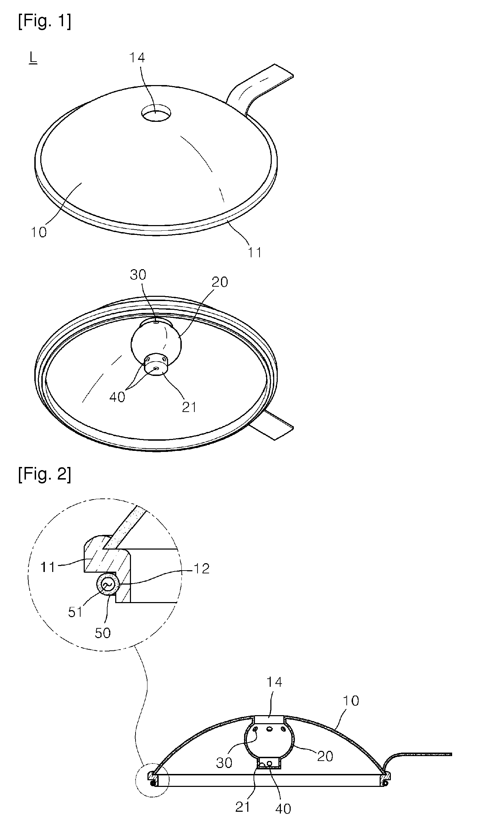

A steam vent hole 14 is formed at the center of the lid body 10 in which the recessed portion 20 is formed, and penetrates the lid body 10. The functions of the inlet hole 30, the outlet hole 40 and the steam vent hole 14 are the same as those of their respective counterparts illustrated in FIGS. 1 to 4.

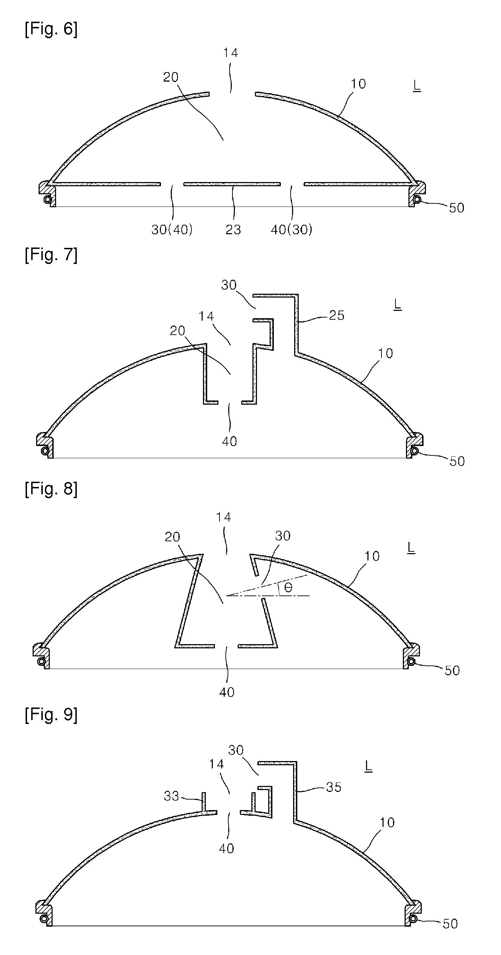

The anti-overflow pot lid L may have another modified structure, as illustrated in FIG. 6.

Referring to FIG. 6, a recessed portion 20 may be formed by forming a horizontal wall 23 that extends horizontally across the space in the lid body 10.

An inlet hole 30 and an outlet hole 40 are formed through the horizontal wall 23 and are a predetermined distance apart from each other. A steam vent hole 14 is formed as a through hole at the center of the lid body 10 in which the recessed portion 20. The inlet hole 30 and the outlet hole 40 may perform the same functions. That is, steam rises through the inlet hole 30 and the outlet hole 40, and water drops through the inlet hole 30 and the outlet hole 40.

The anti-overflow pot lid L may have another modified structure, as illustrated in FIG. 7.

Referring to FIG. 7, a recessed portion 20 may be formed at the center of the lid body 10, and an outlet hole 40 may be formed at the bottom of the recessed portion 20. A steam vent hole 14 may also be formed at the center of the lid body 10 in which the recessed portion 20 is formed.

A steam tube 25, which is L-shaped, is formed on one side of the recessed portion 20, and an inlet hole 30 is formed at the end of the steam tube 25 to face the recessed portion 20.

Since the steam tube 25 protrudes from the top of the lid body 10 and the inlet hole 30 faces the recessed portion 20, steam and bubbles ejected from the inlet hole 30 may move into the recessed portion 20.

Condensed steam in the recessed portion 20 may be ejected through the steam vent hole 14, and condensed water in the recessed portion 20 may be released into the pot body P through the outlet hole 40.

The anti-overflow pot lid L may have another modified structure, as illustrated in FIG. 8.

Referring to FIG. 8, a recessed portion 20 may be formed at the center of the lid body 10 in such a structure that the width at the top thereof is smaller than the width at the bottom thereof. An outlet hole 40 may be formed at the bottom of the recessed portion 20, and a steam vent hole 14 may be formed at the center of the lid body 10 in which the recessed potion 20 is formed.

An inlet hole 30 may be formed on a sidewall of the recessed portion 20 at an inclination of a predetermined angle θ with respect to the outlet hole 40.

According to the example illustrated in FIG. 8, since the inlet hole 30 is slantingly formed on a sidewall of the recessed portion 20, steam and bubbles ejected from the pot body P can be easily guided into the recessed portion 20, and thus, the amount of spillage or leakage from the pot body P can be minimized.

The anti-overflow pot lid L may have another modified structure, as illustrated in FIG. 9.

Referring to FIG. 9, the anti-overflow pot lid L may include a protrusion that protrudes from the top of the lid body 10, rather than having a recessed portion 20.

More specifically, the anti-overflow pot lid L may be curved to protrude, and may include a lid body 10 that covers the opening of the pot body P.

The anti-overflow pot lid may also include a first protrusion 33 which is formed at the top of the lid body 10. The first protrusion 33 may be formed to protrude from the top of the lid body 10, and a steam vent hole 14 may be formed at the top of the first protrusion 33.

The anti-overflow pot lid may also include a second protrusion 35 which is formed on the lid body 10 within the vicinity of the first protrusion 33. The second protrusion 35 may be formed as an L-shaped tube.

An inlet hole 30 is formed at the end of the second protrusion 35 so that steam generated in the pot body P can be guided into the first protrusion 33.

An outlet hole 40 may be formed at the bottom of the first protrusion 33. The outlet hole 40 is formed through the lid body 10, and water condensed from steam may be released into the pot body P through the outlet hole 40.

According to the example illustrated in FIG. 9, bubbles and steam generated in the pot body P can be guided into the first protrusion 33 through the inlet hole 30 of the second protrusion 35. Then, some of the steam is released into the air through the steam vent hole 14, and some of the steam condenses and is released back into the pot body P through the outlet hole 40.

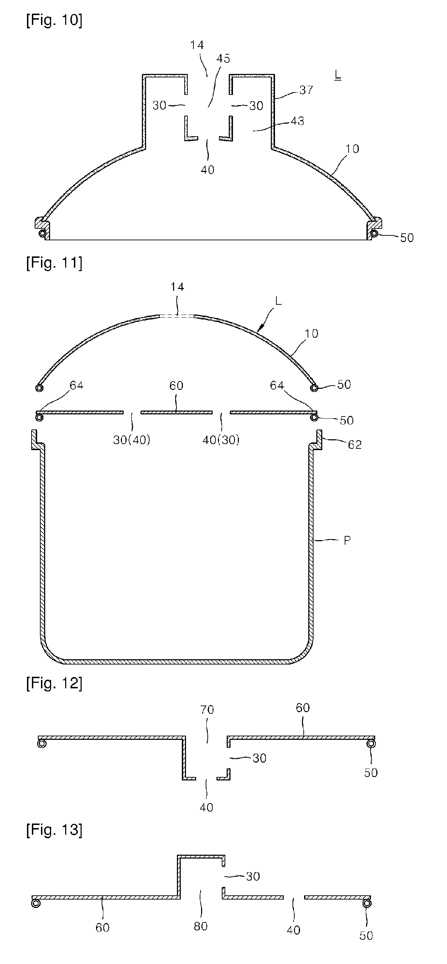

The anti-overflow pot lid L may have another modified structure, as illustrated in FIG. 10.

Referring to FIG. 10, the anti-overflow pot lid L may include a protrusion 37 that protrudes from the top of the lid body 10.

More specifically, the anti-overflow pot lid L may be curved to protrude, and may have a lid body 10 that covers the opening of the pot body P. The protrusion 37 may be formed to protrude from the top of the center of the lid body 10.

The protrusion 37 forms a ring-shaped space 43 therein, and includes a central space surrounded by the ring-shaped space 43. A steam vent hole 14 is formed at the top of the central space 45.

A plurality of inlet holes 30 are formed on an inner sidewall of the protrusion 37 that forms the ring-shaped space 43, so that steam generated in the pot body P can be guided into the central space 45.

An outlet hole 40 is formed through the lid body 10 at the bottom of the central space 45 so that any water in the central space 45 can be released into the pot body P therethrough.

Bubbles and steam are guided into the central space 45 through the inlet holes 30 of the protrusion 37. Then, some of the steam is released into the air through the steam vent hole 14, and some of the steam condenses and is released back into the pot body P through the outlet hole 40 at the bottom of the central space 45.

As illustrated in FIG. 3, the lid body 10 has the engaging portion 11, which is inserted into and engages with the pot body P, and also has the silicon packing 50 in which the expansion space 51 is provided. Accordingly, the anti-overflow pot lid L can be firmly coupled to the pot body P and can be prevented from rattling.

Due to the presence of the engaging portion 11, the pressure in the pot body P can be increased, and accordingly, bubbles generated in the pot body P can be easily popped and removed.

The anti-overflow pot lid L may have another modified structure, as illustrated in FIG. 11.

Referring to FIG. 11, the anti-overflow pot lid L may include a stopping board 60, which is separate from a lid body 10. More specifically, the anti-overflow pot lid L may include the lid body 10, which covers the opening of the pot body P, and a steam vent hole 14 is formed at the center of the top of the lid body 10 and vertically penetrates the lid body 10.

The anti-overflow pot lid L may also include the stopping board 60, which has an outer rim 64 that engages with an extended rim 62 of the pot body P so as to be able to be held and supported by the pot body P. The stopping board 60 may be formed to conform to the cross-sectional shape of the pot body P. For example, the stopping board 60 may be formed as a circular board.

An inlet hole 30 is formed as a through hole that vertically penetrates the stopping board 60, so that steam generated in the pot body P can be guided into the space above the stopping board 60.

An outlet hole 40 is formed as a through hole that vertically penetrates the stopping board 60, and is a predetermined distance apart from the inlet hole 30. Water condensed from steam may be discharged from the empty space in the anti-overflow pot lid L into the pot body P through the outlet hole 40.

The outer rim 64 of the stopping board 60 engages with the extended rim 62 of the pot body P so as to be able to be held and supported by the pot body P. When the lid body 10 is placed over the pot body P, the space in the pot body P is partitioned by the stopping board 60.

The inlet hole 30 and the outlet hole 40 may perform the same functions. That is, steam rises through the inlet hole 30 and the outlet hole 40, and water drops through the inlet hole 30 and the outlet hole 40. Since the stopping board 60 is separate from the lid body 10, the stopping board 60 can be easily cleaned after use.

FIG. 12 illustrates a modified example of the stopping board 60.

Referring to FIG. 12, the stopping board 60 includes a recess 70 formed at the center thereof. An outlet hole 40 is formed at the bottom of the recess 70. An inlet hole 30 is formed on a sidewall of the recess 70.

According to the example illustrated in FIG. 12, bubbles and steam can be guided into the recess 70 through the inlet hole 30. Then, some of the steam is released into the air through the steam vent hole 14, and some of the steam condenses and is released back into the pot body P through the outlet hole 40.

FIG. 13 illustrates another modified example of the stopping board 60.

Referring to FIG. 13, the stopping board 60 includes a protrusion 80 that protrudes from the stopping board 60. An outlet hole 40 is formed through the stopping board 60, and an inlet hole 30 is formed on a sidewall of the protrusion 80 and is located higher than the outlet hole 40.

According to the example illustrated in FIG. 13, bubbles and steam can be guided into the recess 70 through the inlet hole 30. Then, some of the steam is released into the air through the steam vent hole 14 formed at the lid body 10, and some of the steam condenses and is released back into the pot body P through the outlet hole 40.

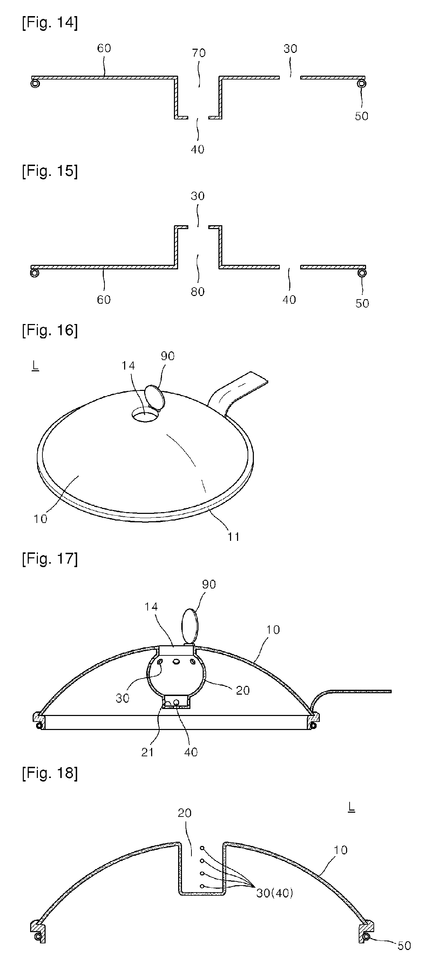

FIG. 14 illustrates another modified example of the stopping board 60.

Referring to FIG. 14, the stopping board 60 includes a recess 70 formed at the center thereof. An outlet hole 40 is formed at the bottom of the recess 70, and an inlet hole 30 is formed on the stopping board 60.

According to the example illustrated in FIG. 14, bubbles and steam can be guided into the recess 70 through the inlet hole 30 of the stopping board 60. Then, some of the steam is released into the air through the steam vent hole 14 formed at the lid body 10, and some of the steam condenses and is released back into the pot body P through the outlet hole 40.

FIG. 15 illustrates another modified example of the stopping board 60.

Referring to FIG. 15, the stopping board 60 includes a protrusion 80 formed at the center thereof. An out let hole 40 is formed on the stopping board 60, and an inlet hole 30 is formed at the top of the protrusion 80.

According to the example illustrated in FIG. 15, bubbles and steam can be introduced into the space above the stopping board 60 through the inlet hole 30 of the protrusion 80. Then, some of the steam is released into the air through the steam vent hole 14 formed at the lid body 10, and some of the steam condenses and is released back into the pot body P through the outlet hole 40 on the stopping board 60.

A silicon packing 50 may be provided along an outer rim 64 of the stopping board 60. The silicon packing 50 may have an expansion space 50 therein that thermally expands.

That is, if the lid body 10 is fixed onto the pot body P by fitting the silicon packing 50 to the extended rim 62 of the pot body P, as illustrated in FIG. 11, the silicon packing 50 can be pressed against the pot body P and can thus effectively seal the pot body P from the outside.

According to the example illustrated in FIG. 15, the stopping board 60 can effectively increase the steam pressure in the pot body P, and as a result, bubbles generated in the pot body P can be easily popped and removed.

Referring to FIGS. 16 and 17, the anti-overflow pot lid L may also include a cover 90, which is provided on one side of a steam vent hole 14 so as to be able to be open or closed. The cover 90 is opened so as to open the steam vent hole 14 in response to steam pressure being generated in the pot body P, and is closed by its own weight so as to shut the steam vent hole 14 in response to the steam pressure being released.

The cover 90 can effectively prevent steam leakage, thereby increasing the rate of collection of steam. In addition, the cover 90 can effectively prevent contamination of the contents of the pot body P by preventing infiltration of foreign materials into the recessed portion 20 or the lid body 10.

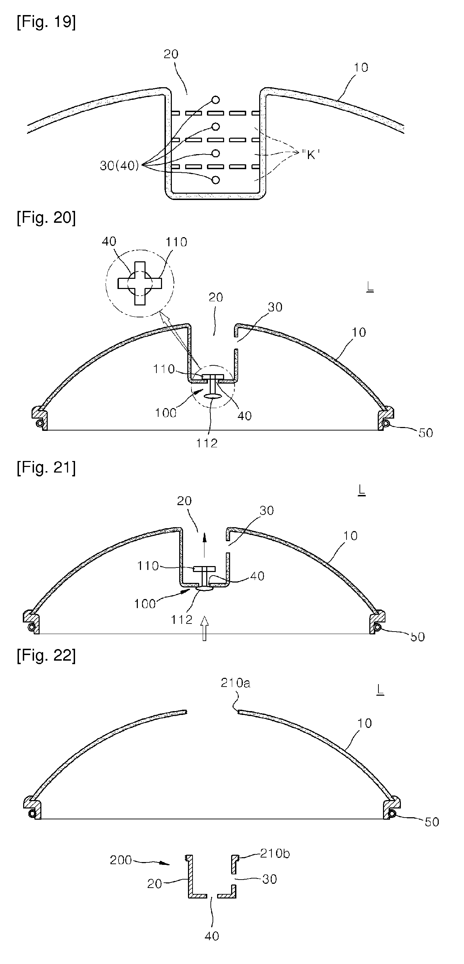

Referring to FIGS. 18 and 19, the anti-overflow pot lid L may include a plurality of inlet/outlet holes 30(40) that are vertically formed in a recessed portion 20.

In the example illustrated in FIGS. 18 and 19, at an early stage of cooking, bubbles and water may be let in or out of the recessed portion 20 through lower inlet/outlet holes 30(40) at a lower part of the recessed portion 20, rather than upper inlet/outlet holes 30(40) at an upper part of the recessed portion. Accordingly, the lower inlet/outlet holes 30(40) may be clogged with bubbles or food materials K from the pot body P earlier than the upper inlet/outlet holes 30(40).

However, even if the lower inlet/outlet holes 30(40) are clogged, steam and water still can be let in or out of the recessed portion 20 through the upper inlet/outlet holes 30(40). Accordingly, the anti-overflow pot lid L can be used without being completely clogged with bubbles or the food materials K for a long time.

Referring to FIGS. 20 and 21, the anti-overflow pot lid L may include an inlet hole 30 formed at an upper part of a sidewall of a recessed portion 20 and an outlet hole 40 formed at the bottom of the recessed portion 20. The anti-overflow pot lid L may also include an elevatable stopper 100. The elevatable stopper 100 includes a cross-shaped latch 110 which is formed at the top of the elevatable stopper 100 and a silicon packing 112 which is attached to the bottom of the elevatable stopper 100. The elevatable stopper 100 may be configured to be able to move vertically.

In response to the pot body P being heated and as a result, the pressure in the pot body increasing, the elevatable stopper 100 is elevated so that the outlet hole 40 is closed by the silicon packing 112 and as a result, steam and bubbles from the pot body P can be guided into the recessed portion 20 through the inlet hole 30.

As the steam and the bubbles in the recessed portion 20 gradually cool down, they gradually turn to water, and the water presses down the silicon packing 112 into the outlet hole 40. As a result, the elevatable stopper 100 is lowered so that the outlet hole 40 is opened by the silicon packing 112. Accordingly, the water is released into the pot body P through the empty space between the cross-shaped latch 112 and the outlet hole 40.

According to the example illustrated in FIGS. 20 and 21, the anti-overflow pot lid L can effectively prevent rattling and spillage or leakage. In addition, the anti-overflow pot lid L has such a simple structure that an increase in the manufacturing cost thereof can be minimized.

Moreover, the anti-overflow pot lid L can prevent excessive steam release during cooking and can thus allow food to be cooked under high pressure. Furthermore, the anti-overflow pot lid L can effectively prevent excessive water evaporation during cooking.

The anti-overflow pot lid L may have another modified structure, as illustrated in FIG. 22.

Referring to FIG. 22, the anti-overflow pot lid L may be curved to protrude, and may include a lid body 10 that covers the opening of the pot body P.

The anti-overflow pot lid L may also include a recessed portion 20 which is formed on the inside of the lid body 10. An inlet hole 30 is formed at an upper part of a sidewall of the recessed portion 20, and an outlet hole 40 is formed at the bottom of the recessed portion 20.

Steam generated in the pot body P is introduced into the recessed portion 20 through the inlet hole 30, and water condensed from the steam is released from the recessed portion 20 into the pot body P through the outlet hole 40.

The anti-overflow pot lid L may also include an attachment/detachment unit 200 that can removably couple and fix the upper rim of the recessed portion 20 to the lid body 10.

The attachment/detachment unit 200 includes a female screw portion 210a which is formed at the center of the lid body 10 and a male screw portion 210b which is formed on an upper outer surface of the recessed portion 20. The recessed portion 20 can be attached to or detached from the lid body 10 by the attachment/detachment unit 200.

According to the example illustrated in FIG. 22, since the recessed portion 20 is configured to be removable from the lid body 10, the recessed portion 20 can be easily cleaned and thus hygienically maintained.

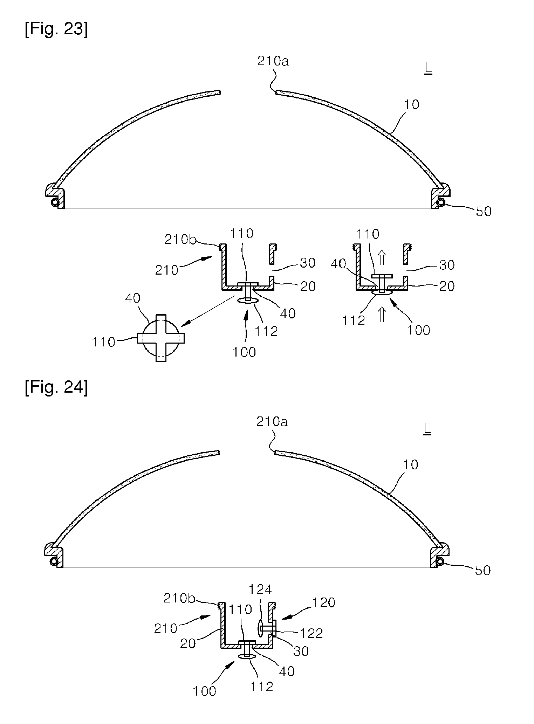

The anti-overflow pot lid L may have another modified structure, as illustrated in FIG. 23.

Referring to FIG. 23, an elevatable stopper 100 is formed in an outlet hole 40 formed at the bottom of a recessed portion 20, so as to be able to move vertically. The elevatable stopper 100 includes a cross-shaped latch 110 which is formed at the top of the elevatable stopper 100 and a silicon packing 112 which is attached to the bottom of the elevatable stopper 100.

In response to the pot body P being heated and as a result, the pressure in the pot body P increasing, the elevatable stopper 100 is elevated so that the outlet hole 40 can be blocked by the silicon packing 112. As a result, steam and bubbles from the pot body P can be introduced into the recessed portion 20 through the inlet hole 30.

As the steam and bubbles in the recessed portion 20 gradually cool down, they gradually turn to water, and the water presses down the silicon packing 112 into the outlet hole 40. As a result, the elevatable stopper 100 is lowered so that the outlet hole 40 is opened by the silicon packing 112. Accordingly, the water is released into the pot body P through the outlet hole 40, and particularly, through the empty space between the cross-shaped latch 112 and the outlet hole 40, as illustrated in FIG. 23.

The anti-overflow pot lid L may have another modified structure, as illustrated in FIG. 24.

Referring to FIG. 24, a horizontal stopper 122 is formed in an inlet hole 30 so as to be able to move horizontally. The horizontal stopper 122 includes a cross-shaped latch 122 which is formed at one end of the horizontal stopper 122 and penetrates an inlet hole 30, and a silicon packing 124 which is attached to the other end of the horizontal stopper 122. In response to the pot body P being heated and as a result, the pressure in the pot body P increasing, the horizontal stopper 120 is moved to one side thereof so that steam and bubbles from the pot body P are introduced into the recessed portion 20 through the inlet hole 30. The horizontal stopper 120 can prevent the backflow of steam and bubbles through the inlet hole 30.

An elevatable stopper 100 is provided in an outlet hole 40 so as to be able to move vertically. The elevatable stopper 100 includes a cross-shaped latch 110 which is formed at the top of the elevatable stopper 100 and a silicon packing 112 which is attached to the bottom of the elevatable stopper 100. In response to the pot body P being heated and as a result, the pressure in the pot body P increasing, the elevatable stopper 100 is elevated so that the outlet hole 40 can be blocked by the silicon packing 112. In this case, the steam and bubbles introduced into the recessed portion 20 can be discharged through the inlet hole 30.

However, in response to the steam and bubbles in the recessed portion 20 gradually cooling down and turning to water, the elevatable stopper 100 is lowered so that the outlet hole 40 is opened by the silicon packing 112 and as a result, the water is released into the pot body P through the outlet hole 40.

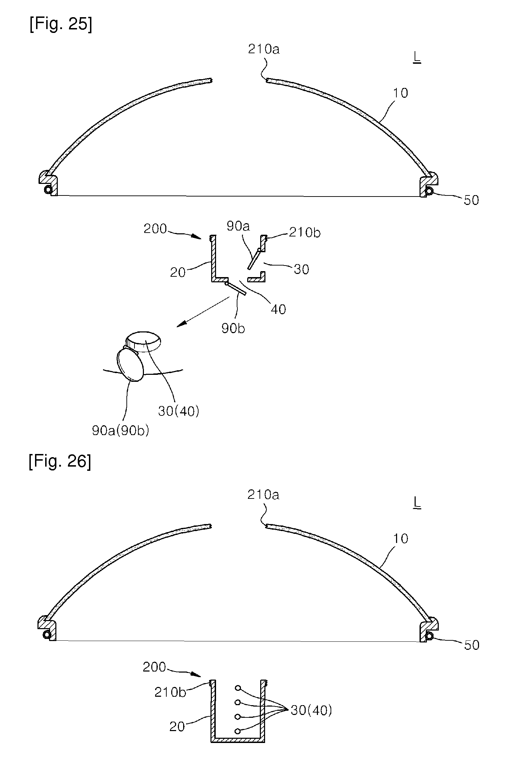

The anti-overflow pot lid L may have another modified structure, as illustrated in FIG. 25.

Referring to FIG. 25, a first cover 90a and a second cover 90b are provided at an inlet hole 30 and an outlet hole 40, respectively, so as to be able to be open or closed. The first cover 90a of the inlet hole 30 is opened in response to steam pressure being generated, and is closed by its own weight in response to the steam pressure being released. The second cover 90b of the outlet hole 40 is closed in response to steam pressure being generated, and is opened by its own weight so as to discharge any water in a recessed portion 20 into the pot body P in response to the steam pressure being released.

The first and second covers 90a and 90b can prevent the backflow of steam through the inlet hole 30 and the outlet hole 40, thereby considerably increasing the rate of collection of steam.

The anti-overflow pot lid L may have another modified structure, as illustrated in FIG. 26.

Referring to FIG. 26, a plurality of inlet/outlet holes 30(40) are vertically arranged in a recessed portion 20. Bubbles and water may be let in or out of the recessed portion 20 first through lower inlet/outlet holes 30(40) at a lower part of the recessed portion 20, rather than upper inlet/outlet holes 30(40) at an upper part of the recessed portion. Then, even if the lower inlet/outlet holes 30(40) are clogged with bubbles or food materials from the pot body P, steam and water still can be let in or out of the recessed portion 20 through the upper inlet/outlet holes 30(40).

Accordingly, the anti-overflow pot lid L can be used without being completely clogged with bubbles or food materials for a long time.

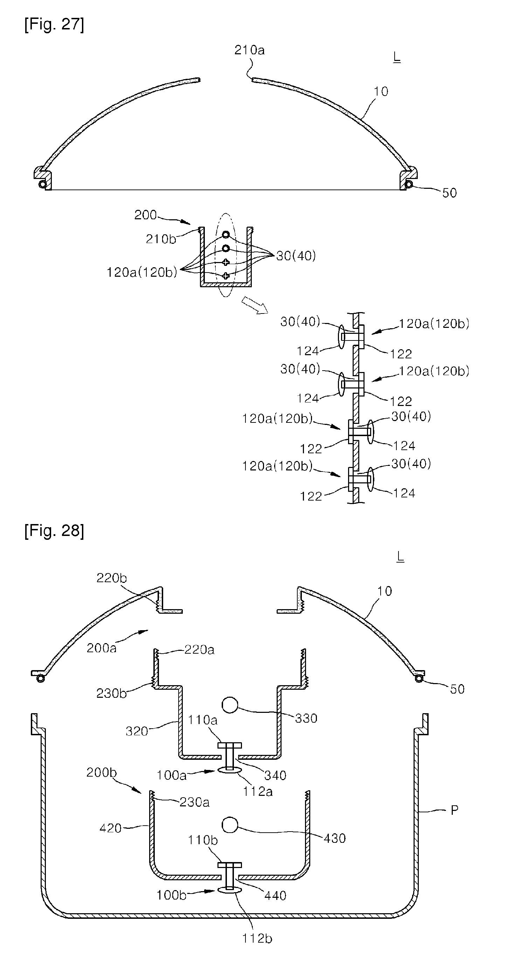

The anti-overflow pot lid L may have another modified structure, as illustrated in FIG. 27.

Referring to FIG. 27, a plurality of inlet/outlet holes 30(40) are vertically arranged in a recessed portion 20, and first or second horizontal stoppers 120a or 120b are provided in the inlet/outlet holes 30(40) so as to be able to move horizontally. Each of the first or second horizontal stoppers 120a or 120b includes a cross-shaped latch 122 which is formed at one end of the corresponding stopper and a silicon packing 124 which is attached to the other end of the corresponding stopper.

In response to the pot body P being heated and as a result, the pressure in the pot body P increasing, the first horizontal stoppers 120a move to one side thereof so that steam and bubbles from the pot body P are introduced into the recessed portion 20 through the inlet/outlet holes 30(40). The first horizontal stoppers 120a can prevent the backflow of steam and bubbles through the inlet/outlet holes 30(40). The second horizontal stoppers 120b are configured to move in an opposite direction to that of the first horizontal stoppers 120a so as to effectively release any water in the recessed portion 20 into the pot body P.

The first horizontal stoppers 120a and the second horizontal stoppers 120b can effectively circulate steam or water while preventing the backflow of steam or water through the inlet/outlet holes 30(40).

The anti-overflow pot lid L may have another modified structure, as illustrated in FIG. 28.

Referring to FIG. 28, the anti-overflow pot lid L may be curved to protrude, and may include a lid body 10 that covers the opening of the pot body P.

The anti-overflow pot lid L may also include a first recessed portion 320 which is formed below the lid body 10.

A first inlet hole 330 through which steam is introduced in the first recessed portion 320 is formed at an upper part of the first recessed portion 320, and a first outlet hole 340 through which water condensed from the steam is released from the first recessed portion 320 is formed at the bottom of the first recessed portion 320.

The anti-overflow pot lid L may also include a first attachment/detachment unit 200a which is provided at the top of the first recessed portion 320 and can removably couple and fix the upper rim of the first recessed portion 320 to the lid body 10.

The first attachment/detachment unit 200a includes a male screw portion 220b which is formed on a lower outer surface of a cylindrical protrusion that protrudes downwardly from the center of the lid body 10 and a female screw portion 220a which is formed on an upper inner surface of the first recessed portion 320. The female screw portion 220a and the male screw portion 220b are configured to be attachable to or detachable from each other.

The anti-overflow pot lid L may also include a second recessed portion 420 which surrounds the first recessed portion 320. A second inlet hole 430 through which steam generated in the pot body P is introduced into the second recessed portion 420 is formed at an upper part of the second recessed portion 420, and a second outlet hole 440 through which water condensed from the steam is released into the pot body P is formed at the bottom of the second recessed portion 420.

The anti-overflow pot lid L may also include a second attachment/detachment unit 200b which is provided at the top of the second recessed portion 420 and can removably couple and fix the upper rim of the second recessed portion 420 to the first recessed portion 320.

The second attachment/detachment unit 200b includes a male screw portion 230b which is formed on a lower outer surface of the first recessed portion 320 and a female screw portion 230a which is formed on an upper inner surface of the second recessed portion 420. The female screw portion 230a and the male screw portion 230b are configured to be attachable to or detachable from each other.

In the example illustrated in FIG. 28, the first recessed portion 320 is configured to be removable from the lid body 10, and the second recessed portion 420 is configured to be removable from the first recessed portion 320. Accordingly, the first and second recessed portions 320 and 420 can both be easily cleaned and hygienically maintained.

The anti-overflow pot lid L may also include first and second elevatable stoppers 100a and 100b which are provided in the first and second outlet holes 340 and 440, respectively, of the first and second recessed portions 320 and 420 so as to be able to move vertically. The first and second elevatable stoppers 100a and 100b include cross-shaped latches 110a and 110b, respectively, and silicon packings 112a and 112b, respectively. The cross-shaped latches 110a and 110b are formed at the top of the first and second elevatable stoppers 100a and 100b, respectively, and penetrate the first and second outlet holes 340 and 440, respectively. The silicon packings 112a and 112b are formed at the bottom of the first and second elevatable stoppers 100a and 100b, respectively.

In response to the pot body P being heated and as a result, the pressure in the pot body P increasing, the second elevatable stopper 100b is elevated so that the second outlet hole 440 is closed by the silicon packing 112b and as a result, steam and bubbles from the pot body P can be guided into the second recessed portion 420 through the second inlet hole 430.

In response to the pressure in the second recessed portion 420 increasing, the first elevatable stopper 100a is elevated so that the first outlet hole 340 is closed by the silicon packing 112a and as a result, steam and bubbles from the second recessed portion 420 can be guided into the first recessed portion 320 through the first inlet hole 330.

In response to the steam and the bubbles in the first recessed portion 320 gradually cooling down and turning to water, the first elevatable stopper 100a is lowered so that the first outlet hole 340 is opened by the silicon packing 112a and as a result, the water is released into the second recessed portion 420 through the first outlet hole 340.

In response to the second recessed portion 420 being filled with water, the second elevatable stopper 100b is lowered so that the second outlet hole 440 is opened.

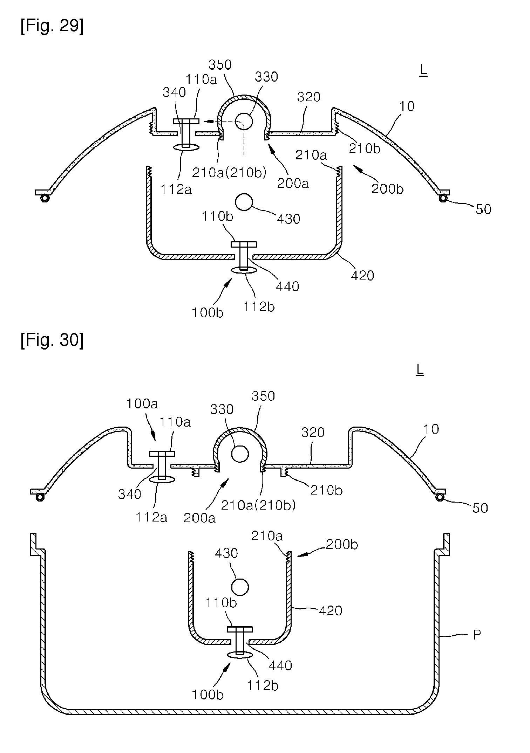

The anti-overflow pot lid L may have another modified structure, as illustrated in FIG. 29.

Referring to FIG. 29, the anti-overflow pot lid L may be curved to protrude, and may include a lid body 10 that covers the opening of the pot body P.

The anti-overflow pot lid L may also include a first recessed portion 320 which is recessed into the center of the lid body 10. A first outlet hole 340 is formed at the bottom of the first recessed portion 320. An auxiliary lid 350 having the first inlet hole 330 is formed to protrude from the top of the first recessed portion 320.

The anti-overflow pot lid L may also include a first attachment/detachment unit 200a which couples the bottom of the auxiliary lid 350 to the center of the first recessed portion 320 so as for the auxiliary lid 350 to be removable from the first recessed portion 320. The first attachment/detachment unit 200a includes a female screw portion 210a which is formed at the center of the bottom of the first recessed portion 320 and a male screw portion 210b which is formed on a lower outer surface of the auxiliary lid 350.

The anti-overflow pot lid L may also include a second recessed portion 420 which surrounds the first recessed portion 320. A second inlet hole 430 through which steam generated in the pot body P is introduced into the second recessed portion 420 is formed at an upper part of the second recessed portion 420 and a second outlet hole 440 through which water condensed from the steam is released into the pot body P is formed at the bottom of the second recessed portion 420.

The second recessed portion 420 can be removably coupled and fixed to the first recessed portion 320 by a second attachment/detachment unit 200b.

The second attachment/detachment unit 200b includes a male screw portion 210b which is formed on a lower outer surface of the first recessed portion 320 and a female screw portion 210a which is formed on an upper inner surface of the second recessed portion 420. The female screw portion 210a and the male screw portion 210b of the second attachment/detachment unit 200b are configured to be attachable to or detachable from each other.

In the example illustrated in FIG. 29, the auxiliary lid 350 is configured to be removable from the first recessed portion 320 of the lid body 10, and the second recessed portion 420 is configured to be removable from the first recessed portion 320. Accordingly, the auxiliary lid 350 and the second recessed portion 420 can be easily cleaned, and hygienically maintained.

The anti-overflow pot lid L may also include first and second elevatable stoppers 100a and 100b which are provided in the first and second outlet holes 340 and 440, respectively, of the first and second recessed portions 320 and 420 so as to be able to move vertically. The first and second elevatable stoppers 100a and 100b include cross-shaped latches 110a and 110b, respectively, and silicon packings 112a and 112b, respectively. The cross-shaped latches 110a and 110b are formed at the top of the first and second elevatable stoppers 100a and 100b, respectively, and penetrate the first and second outlet holes 340 and 440, respectively. The silicon packings 112a and 112b are formed at the bottom of the first and second elevatable stoppers 100a and 100b, respectively.

In response to the pot body P being heated and as a result, the pressure in the pot body P increasing, the second elevatable stopper 100b is elevated so that the second outlet hole 440 is closed by the silicon packing 112b and as a result, steam and bubbles from the pot body P can be guided into the second recessed portion 420 through the second inlet hole 430.

In response to the pressure in the second recessed portion 420 increasing, the first elevatable stopper 100a is elevated so that the first outlet hole 340 is closed by the silicon packing 112a and as a result, steam and bubbles from the second recessed portion 420 can be guided into the first recessed portion 320 through the first inlet hole 330.

In response to the steam and the bubbles in the first recessed portion 320 gradually cooling down and turning to water, the first elevatable stopper 100a is lowered so that the first outlet hole 340 is opened by the silicon packing 112a and as a result, the water is released into the second recessed portion 420 through the first outlet hole 340.

In response to water being released into the second recessed portion 420, the second elevatable stopper 100b is lowered so that the second outlet hole 440 is opened and as a result, the water is released into the pot body P through the second outlet hole 440.

The anti-overflow pot lid L may have another modified structure, as illustrated in FIG. 30.

Referring to FIG. 30, the anti-overflow pot lid L may be curved to protrude, and may include a lid body 10 that covers the opening of the pot body P.

The anti-overflow pot lid L may also include a first recessed portion 320 which is recessed into the center of the lid body 10. A first inlet hole 340 is formed at the bottom of the first recessed portion 320, and a first outlet hole 330 is formed at the center of the first recessed portion 320. The anti-overflow pot lid L may also include an auxiliary lid 350 which protrudes from the top of the first recessed portion 320.

The anti-overflow pot lid L may also include a first attachment/detachment unit 200a which removably couples the lower rim of the auxiliary lid 350 to the center of the first recessed portion 320. The first attachment/detachment unit 200a includes a female screw portion 210a which is formed at the center of the bottom of the first recessed portion 320 and a male screw portion 210b which is formed on a lower outer surface of the auxiliary lid 350. The female screw portion 210a and the male screw portion 210b of the first attachment/detachment unit 200a are configured to be attachable to or detachable from each other.

The anti-overflow pot lid L may also include a second recessed portion 420 which is disposed below the first recessed portion 320. A second inlet hole 430 through which steam generated in the pot body P is introduced into the second recessed portion 420 is formed at an upper part of the second recessed portion 420 and a second outlet hole 440 through which water condensed from the steam is released into the pot body P is formed at the bottom of the second recessed portion 420.

The anti-overflow pot lid L may also include a second attachment/detachment unit 200b which removably couples and fixes the upper rim of the second recessed portion 420 to the first recessed portion 320.

The second attachment/detachment unit 200b includes a male screw portion 210b which is formed on an outer surface of a cylindrical protrusion that protrudes from the bottom of the first recessed portion 320 and a female screw portion 210a which is formed on an upper inner surface of the second recessed portion 420. The female screw portion 210a and the male screw portion 210b of the second attachment/detachment unit 200b are configured to be attachable to or detachable from each other.

In the example illustrated in FIG. 30, the auxiliary lid 350 is configured to be removable from the first recessed portion 320 of the lid body 10, and the second recessed portion 420 is configured to be removable from the first recessed portion 320. Accordingly, the auxiliary lid 350 and the second recessed portion 420 can be easily cleaned, and hygienically maintained.

The anti-overflow pot lid L may also include first and second elevatable stoppers 100a and 100b which are provided in the first and second outlet holes 340 and 440, respectively, of the first and second recessed portions 320 and 420 so as to be able to move vertically. The first and second elevatable stoppers 100a and 100b include cross-shaped latches 110a and 110b, respectively, and silicon packings 112a and 112b, respectively. The cross-shaped latches 110a and 110b are formed at the top of the first and second elevatable stoppers 100a and 100b, respectively, and penetrate the first and second outlet holes 340 and 440, respectively. The silicon packings 112a and 112b are formed at the bottom of the first and second elevatable stoppers 100a and 100b, respectively.

In response to the pot body P being heated and as a result, the pressure in the pot body P increasing, the second elevatable stopper 100b is elevated so that the second outlet hole 440 is closed by the silicon packing 112b and as a result, steam and bubbles from the pot body P can be guided into the second recessed portion 420 through the second inlet hole 430.

In response to the pressure in the second recessed portion 420 increasing, the first elevatable stopper 100a is elevated so that the first outlet hole 340 is closed by the silicon packing 112a and as a result, steam and bubbles from the second recessed portion 420 can be guided into the first recessed portion 320 through the first inlet hole 330.

In response to the steam and the bubbles in the first recessed portion 320 gradually cooling down and turning to water, the first elevatable stopper 100a is lowered so that the first outlet hole 340 is opened by the silicon packing 112a and as a result, the water is released into the second recessed portion 420 through the first outlet hole 340.

Steam and bubbles in the second recessed portion 420 may also cool down and condense into water, separately the steam and the bubbles in the first recessed portion 320. As a result, the second elevatable stopper 100b is lowered so that the second outlet hole 440 is opened. Accordingly, water is released into the pot body P through the second outlet hole 440.

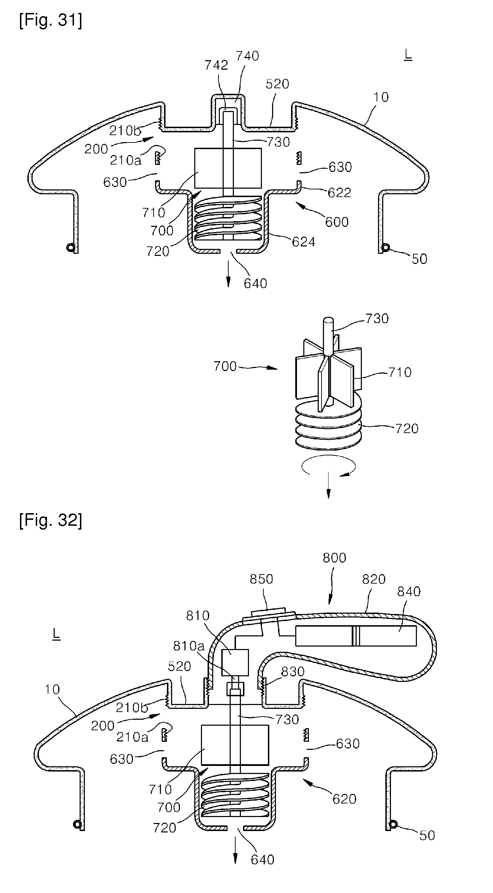

The anti-overflow pot lid L may have another modified structure, as illustrated in FIG. 31.

Referring to FIG. 31, the anti-overflow pot lid L may be curved to protrude, and may include a lid body 10 that covers the opening of the pot body P.

The anti-overflow pot lid L may also include an upper recessed portion 520 which is recessed into the center of the lid body 10 and a lower recessed portion 620 which is disposed below the upper recessed portion 520. A plurality of inlet holes 630 through which steam generated in the pot body P is introduced into the lower recessed portion 620 are formed at an upper part of the lower recessed portion 620, and an outlet hole 640 through which water condensed from the steam is released into the pot body P is formed at the bottom of the lower recessed portion 620.

The upper recessed portion 520 and the lower recessed portion 620 can be removably coupled and fixed to each other by an attachment/detachment unit 200. The attachment/detachment unit 200 includes a male screw portion 210b which is formed a lower outer surface of the first recessed portion 320 and a female screw portion 210a which is formed on an upper inner surface of the second recessed portion 420. The female screw portion 210a and the male screw portion 210b are configured to be attachable to or detachable from each other.

The anti-overflow pot lid L may also include a rotation unit 700. The rotation unit 700 includes a plurality of wings 710 which are rotated by steam introduced into the lower recessed portion 620 through the inlet holes 630 and a screw 720 which is rotated by the rotation force of the wings 710 and pushes any water in the lower recessed portion 620 toward the outlet hole 640 so as for the water to be discharged.

The wings 710 and the screw 720 are both coupled to a vertical axial member 730. The vertical axial member 730 is rotatably coupled to an inner bearing 742 of a fitting unit 740 which is provided at the center of the upper recessed portion 520.

Due to the pressure of steam introduced into the lower recessed portion 620 through the inlet holes 630, the wings 710 of the rotation unit 700 and the screw 720 are rotated at the same time so as to push water in the lower recessed portion 620 toward the outlet hole 640 and thus to discharge the water into the pot body P.

In an example, the lower recessed portion 620 may be formed as a hollow tube having a first diameter portion 622 in which the wings 710 of the rotation unit 700 are disposed and a second diameter portion 624 in which the screw 720 of the rotation unit 700 is disposed, wherein the diameter of the first diameter portion 622 is greater than the diameter of the second diameter portion 624.

In another example, the lower recessed portion 620 may be formed as a cylinder having a first diameter portion 622 in which the wings 710 of the rotation unit 700 are disposed and a second diameter portion 624 in which the screw 720 of the rotation unit 700 is disposed, wherein the diameter of the first diameter portion 622 is the same as the diameter of the second diameter portion 624.

In the example illustrated in FIG. 31, the lower recessed portion 620 is configured to be removable from the upper recessed portion 520 of the lid body 10. Accordingly, the lower recessed portion 620 and the rotation unit 700 in the lower recessed portion 620 can be easily cleaned, and hygienically maintained.

In addition, water condensed in the lower recessed portion 620 can be effectively released into the pot body P by the screw 720 of the rotation unit 700.

The anti-overflow pot lid L may have another modified structure, as illustrated in FIG. 32.

Referring to FIG. 32, the anti-overflow pot lid L may be curved to protrude, and may include a lid body 10 that covers the opening of the pot body P.

The anti-overflow pot lid L may also include an upper recessed portion 520 which is recessed into the center of the lid body 10 and a lower recessed portion 620 which is disposed below the upper recessed portion 520. A plurality of inlet holes 630 through which steam generated in the pot body P is introduced into the lower recessed portion 620 are formed at an upper part of the lower recessed portion 620, and an outlet hole 640 through which water condensed from the steam is released into the pot body P is formed at the bottom of the lower recessed portion 620.

The anti-overflow pot lid L may also include an attachment/detachment unit 200 which removably couples and fixes the upper rim of the lower recessed portion 620 to the upper recessed portion 520. The attachment/detachment unit 200 includes a male screw portion 210b which is formed a lower outer surface of the first recessed portion 320 and a female screw portion 210a which is formed on an upper inner surface of the second recessed portion 420. The female screw portion 210a and the male screw portion 210b are configured to be attachable to or detachable from each other.

The anti-overflow pot lid L may also include a rotation unit 700. The rotation unit 700 includes a plurality of wings 710 which are rotated by steam introduced into the lower recessed portion 620 through the inlet holes 630 and a screw 720 which is rotated by the rotation force of the wings 710 and pushes any water in the lower recessed portion 620 toward the outlet hole 640 so as for the water to be discharged. The anti-overflow pot lid L may also include a driving unit 800. The driving unit 800 includes a motor 810 which uses power to rotate a vertical axial member 730 to which the wings 710 and the screw 720 of the rotation unit 700 are both coupled.

The vertical axial member 730 is rotatably coupled to an axial member 810a of the motor 810 of the driving unit 800 and is thus rotated in a power-driven manner.

The driving unit 800 also includes a housing 820 which is removably screw-coupled (830) to the center of the upper recessed portion 520.

In the example illustrated in FIG. 32, the lower recessed portion 620 is configured to be removable from the upper recessed portion 520 of the lid body 10, and the housing 820 of the driving unit 800 is configured to be removable from the upper recessed portion 520. Accordingly, the lower recessed portion 620 and the rotation unit 700 in the lower recessed portion 620 can be easily cleaned, and hygienically maintained.

The housing 820 of the driving unit 800 is bent in an L shape so as to form a handle. A battery 840 is embedded in the housing 820. The battery 840 is electrically connected to the motor 810 via a switch 850. Accordingly, the wings 710 and the screw 720 of the rotation unit 700 can be rotated in a power-driven manner by manipulating the switch 850 to drive the motor 810.

According to the example illustrated in FIG. 32, the screw 620 of the rotation unit 700 is rotated in a power-driven manner by the motor 810 of the driving unit 800. Accordingly, steam and bubbles can be effectively introduced into the lower recessed portion 620, and water condensed from the steam and the bubbles can be effectively released into the pot body P.

As described above, the anti-overflow pot lid L can effectively prevent rattling and spillage or leakage. In addition, the anti-overflow pot lid L has an element with a simple structure for preventing spillage or leakage, and can thus minimize an increase in the manufacturing cost thereof.

Moreover, the anti-overflow pot lid L can allow food to be cooked under high pressure and address the problem of water loss during cooking by preventing excessive steam release and excessive water evaporation.

Furthermore, the anti-overflow pot lid L may include a recessed portion 20 which is removable from a lid body 10. Accordingly, the recessed portion 20 can be easily cleaned, and hygienically maintained.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

### INDUSTRIAL APPLICABILITY

The present invention can be efficiently applied to the manufacture of an anti-overflow pot lid.

## Claims

1. An anti-overflow pot lid, comprising:
a lid body configured to be curved to protrude, and to cover an opening of a pot body;
a recessed portion configured to be recessed downward from the lid body;
one or more inlet holes configured to be formed at an upper part of the recessed portion and let in steam generated in the pot body; and
one or more outlet holes configured to be formed at a lower part of the recessed portion and let out water drops obtained by liquefying the steam into the pot body.

2. The anti-overflow pot lid of claim 1, wherein the recessed portion is formed by forming a steam vent hole at the center of the lid body, a further-recessed portion is formed below the recessed portion to collect water condensed from steam therein, and the outlet holes are formed at the further-recessed portion.

3. The anti-overflow pot lid of claim 2, wherein the recessed portion is formed in the shape of a jar with a larger diameter in the middle than at the top or the bottom thereof.

4. The anti-overflow pot lid of claim 1, wherein the recessed portion is formed by forming a partition which divides the space in the lid body, the inlet holes are formed on a vertical wall of the partition, the outlet holes are formed at a bottom of the partition and a steam vent hole is formed through the center of the lid body where the recessed portion is formed.

5. The anti-overflow pot lid of claim 1, wherein the recessed portion is formed by forming a first partition which extends horizontally across the space in the lid body and a second partition which is recessed into the first partition, the inlet holes are formed on the first partition, the outlet holes are formed at the bottom of the second partition, and a steam vent hole is formed through the center of the lid body where the recessed portion is formed.

6. The anti-overflow pot lid of claim 1, wherein the recessed portion is formed by forming a horizontal wall which extends horizontally across the space in the lid body, the inlet holes and the outlet hole are formed through the horizontal wall to be a predetermined distance apart from each other, and a steam vent hole is formed through the center of the lid body where the recessed portion is formed.

7. The anti-overflow pot lid of claim 1, wherein the recessed portion is formed to be recessed into the center of the lid body, the outlet holes are formed at the bottom of the recessed portion, a steam vent hole is formed at the center of the lid body where the recessed portion is formed, and a steam tube, which is L-shaped, is formed on one side of the recessed portion to protrude from the top of the lid body, and the inlet holes are formed at the end of the steam tube to face the recessed portion.

8. The anti-overflow pot lid of claim 1, wherein the recessed portion is formed in such a structure that the width at the top of the recessed portion is smaller than the width at the bottom of the recessed portion, the outlet holes are formed at the bottom of the recessed portion, a steam vent hole is formed at the center of the lid body where the recessed portion is formed, and the inlet holes are slantingly formed on a sidewall of the recessed portion.

9. An anti-overflow pot lid, comprising:
a lid body configured to be curved to protrude, and to cover an opening of a pot body;
a first protrusion configured to protrude from the top of the lid body 10 and have a steam vent hole formed at the top thereof;
a second protrusion configured to be formed in an L shape and protrude from the lid body within the vicinity of the first protrusion;
an inlet hole configured to be formed at an upper part of the second protrusion and guide steam generated in the pot body into the first protrusion; and
an outlet hole configured to be formed through the lid body and release water condensed from the steam into the pot body.

10. An anti-overflow pot lid, comprising:
a lid body configured to be curved to protrude, and to cover an opening of a pot body;
a protrusion configured to protrude from the top of the center of the lid body, form a ring-shaped space therein and include a central space surrounded by the ring-shaped space and a steam vent hole formed at the top of the central space;
a plurality of inlet holes configured to be formed on an inner sidewall of the protrusion that forms the ring-shaped space, and guide steam generated in the pot body into the central space; and
an outlet hole configured to be formed through the lid body at the bottom of the central space and release water in the central space into the pot body.

11. An anti-overflow pot lid, comprising:
a lid body configured to be curved to protrude, and to cover an opening of a pot body;
a steam vent hole configured to be formed through the center of the lid body;
a stopping board configured to have an outer rim that engages with an extended rim of the pot body so as to be able to be held and supported by the pot body;
an inlet hole configured to be formed to vertically penetrate the stopping board and guide steam generated in the pot body into the space above the stopping board; and
an outlet hole configured to be formed to vertically penetrate the stopping board and release water condensed from the steam into the pot body.

12. The anti-overflow pot lid of claim 11, wherein the stopping board includes a recess which is formed at the center of the stopping board, the outlet hole is formed at the bottom of the recess, and an inlet hole is formed on a sidewall of the recess.

13. The anti-overflow pot lid of claim 11, wherein the stopping board includes a protrusion that protrudes from the stopping board, the outlet hole is formed on the stopping board, and the inlet hole is formed on a sidewall of the protrusion.

14. The anti-overflow pot lid of claim 11, wherein the stopping board includes a recess which is formed at the center of the stopping board, the outlet hole is formed at the bottom of the recess, and the inlet hole is formed on the stopping board.

15. The anti-overflow pot lid of claim 11, wherein the stopping board includes a protrusion which is formed at the center of the stopping board, the out let hole is formed on the stopping board, and the inlet hole is formed at the top of the protrusion.

16. The anti-overflow pot lid of any one of claims 1 to 11, further comprising:
an engaging portion configured to be formed along the rim of the lid body and engage with the pot body by being inserted into the pot body; and
a silicon packing configured to be provided at the engaging portion and have an expansion space therein that thermally expands.

17. The anti-overflow pot lid of any one of claims 11 to 15, further comprising:
a silicon packing configured to be provided along an outer rim of the stopping board and have an expansion space therein that thermally expands.

18. The anti-overflow pot lid of any one of claims 1 to 11, further comprising:
a cover configured to be provided on one side of the steam vent hole so as to be able to be open or closed,
wherein the cover is opened so as to open the steam vent hole in response to steam pressure being generated in the pot body, and is closed by its own weight so as to shut the steam vent hole in response to the steam pressure being released.

19. The anti-overflow pot lid of any one of claims 1 to 15, wherein a plurality of inlet or outlet holes are vertically formed in the recessed portion so that bubbles and water are let in or out of the recessed portion first through lower inlet or outlet holes at a lower part of the recessed portion, rather than upper inlet or outlet holes at an upper part of the recessed portion, and that in response to the lower inlet or outlet holes being clogged with bubbles or food materials from the pot body, bubbles and water are let in or out of the recessed portion through the upper inlet or outlet holes.

20. The anti-overflow pot lid of any one of claims 1 to 15, wherein the inlet hole is formed at an upper part on a sidewall of the recessed portion, the outlet hole is formed at the bottom of the recessed portion, and the anti-overflow pot lid further comprises a horizontal stopper configured to be provided in the inlet hole so as to be able to move vertically, and to include a cross-shaped latch which is formed at the top of the elevatable stopper and a silicon packing which is attached to the bottom of the elevatable stopper, wherein:
in response to the pot body being heated and as a result, the pressure in the pot body increasing, the elevatable stopper is elevated so that the outlet hole is closed by the silicon packing and as a result, steam and bubbles from the pot body can be guided into the recessed portion through the inlet hole; and
in response to the steam and the bubbles in the recessed portion gradually cooling down and turning to water, the elevatable stopper is lowered so that the outlet hole is opened by the silicon packing and as a result, the water is released into the pot body through the outlet hole.

21. An anti-overflow pot lid, comprising:
a lid body configured to be curved to protrude, and to cover an opening of a pot body;
a recessed portion configured to be recessed into the lid body;
an inlet hole configured to be formed at an upper part of the recessed portion and let in steam generated in the pot body; and
an outlet hole configured to be formed at a lower part of the recessed portion and let out water condensed from the steam into the pot body,
wherein the recessed portion is formed by forming a steam vent hole at the center of the lid body, a further-recessed portion is formed below the recessed portion to collect water condensed from steam therein, the outlet hole is formed at the further-recessed portion, the recessed portion is formed in the shape of a jar with a larger diameter in the middle than at the top or the bottom thereof, the anti-overflow pot lid further comprises an engaging portion configured to be formed along the rim of the lid body and engage with the pot body by being inserted into the pot body, and a silicon packing configured to be provided at the engaging portion and have an expansion space therein that thermally expands.

22. An anti-overflow pot lid, comprising:
a lid body configured to be curved to protrude, and to cover an opening of a pot body;
a recessed portion configured to be recessed into the lid body;
an attachment/detachment unit configured to removably couple and fix an upper rim of the recessed portion to the lid body;
an inlet hole configured to be formed at an upper part of the recessed portion and let in steam generated in the pot body; and
an outlet hole configured to be formed at a lower part of the recessed portion and release water condensed from the steam into the pot body.

23. The anti-overflow pot lid of claim 22, wherein the attachment/detachment unit comprises a female screw portion which is formed at the center of the lid body and a male screw portion which is formed on an upper outer surface of the recessed portion and removably couples the recessed portion to the lid body.

24. The anti-overflow pot lid of claim 22 or 23, wherein the inlet hole is formed at an upper part of a sidewall of the recessed portion and the outlet hole is formed at the bottom of the recessed portion.

25. The anti-overflow pot lid of claim 24, further comprising:
an elevatable stopper configured to be provided in the inlet hole so as to be able to move vertically, and to include a cross-shaped latch which is formed at the top of the elevatable stopper and a silicon packing which is attached to the bottom of the elevatable stopper,
wherein:
in response to the pot body being heated and as a result, the pressure in the pot body increasing, the elevatable stopper is elevated so that the outlet hole can be blocked by the silicon packing and as a result, steam and bubbles from the pot body can be introduced into the recessed portion through the inlet hole; and
in response to the steam and bubbles in the recessed portion gradually cooling down and turning to water, the elevatable stopper is lowered so that the outlet hole is opened by the silicon packing and as a result, the water is released into the pot body through the outlet hole.

26. The anti-overflow pot lid of claim 24, further comprising:
a horizontal stopper configured to be provided in an inlet hole so as to be able to move horizontally, and to include a cross-shaped latch which is formed at one end of the horizontal stopper so as to penetrate the inlet hole and a silicon packing which is attached to the other end of the horizontal stopper, wherein in response to the pot body being heated and as a result, the pressure in the pot body increasing, the horizontal stopper is moved to one side thereof so that steam and bubbles from the pot body are introduced into the recessed portion through the inlet hole while preventing the backflow of steam and bubbles through the inlet hole; and
an elevatable stopper configured to be provided in the outlet hole so as to be able to move vertically, and include a cross-shaped latch which is formed at the top of the elevatable stopper and a silicon packing which is attached to the bottom of the elevatable stopper,
wherein:
in response to the pot body being heated and as a result, the pressure in the pot body increasing, the elevatable stopper is elevated so that the outlet hole can be blocked by the silicon packing of the elevatable stopper and as a result, steam and bubbles in the recessed portion can be discharged through the inlet hole; and
in response to the steam and bubbles in the recessed portion gradually cooling down and turning to water, the elevatable stopper is lowered so that the outlet hole is opened by the silicon packing of the elevatable stopper and as a result, the water is released into the pot body through the outlet hole.

27. The anti-overflow pot lid of claim 24, further comprising:
a first cover and a second cover configured to be provided at the inlet hole and the outlet hole, respectively, so as to be able to be open or closed,
wherein the first cover is opened in response to steam pressure being generated, and is closed by its own weight in response to the steam pressure being released, and the second cover is closed in response to steam pressure being generated, and is opened by its own weight so as to discharge any water in the recessed portion into the pot body in response to the steam pressure being released.

28. The anti-overflow pot lid of claim 24, wherein a plurality of inlet or outlet holes are vertically formed in the recessed portion so that bubbles and water are let in or out of the recessed portion first through lower inlet/outlet holes at a lower part of the recessed portion, rather than upper inlet/outlet holes at an upper part of the recessed portion, and that in response to the lower inlet/outlet holes being clogged with bubbles or food materials from the pot body, bubbles and water are let in or out of the recessed portion through the upper inlet/outlet holes.

29. The anti-overflow pot lid of claim 27, further comprising:
first or second horizontal stoppers configured to be provided in each of the inlet/outlet holes as to be able to move horizontally, and to each include a cross-shaped latch which is formed at one end of the corresponding stopper and a silicon packing which is attached to the other end of the corresponding stopper,
wherein in response to the pot body being heated and as a result, the pressure in the pot body increasing, the first horizontal stoppers move to one side thereof so that steam and bubbles from the pot body are introduced into the recessed portion through the inlet/outlet holes while preventing the backflow of steam and bubbles through the inlet/outlet holes, and the second horizontal stoppers move in an opposite direction to that of the first horizontal stoppers so as to discharge any water in the recessed portion into the pot body.

30. An anti-overflow pot lid, comprising:
a lid body configured to be curved to protrude, and to cover an opening of a pot body;
a first recessed portion configured to be formed below the lid body and include a first inlet hole which is formed at an upper part of the first recessed portion and through which steam is introduced in the first recessed portion and and a first outlet hole which is formed at the bottom of the first recessed portion and through which water condensed from the steam is released from the first recessed portion;
a first attachment/detachment unit configured to be provided at the top of the first recessed portion and removably couple and fix an upper rim of the first recessed portion to the lid body;
a second recessed portion configured to surround the first recessed portion and include a second inlet hole which is formed at an upper part of the second recessed portion and through which steam generated in the pot body is introduced into the second recessed portion and a second outlet hole which P is formed at the bottom of the second recessed portion and through which water condensed from the steam is released into the pot body; and
a second attachment/detachment unit configured to be provided at the top of the second recessed portion and removably couple and fix an upper rim of the second recessed portion to the first recessed portion.

31. The anti-overflow pot lid of claim 30, wherein the first attachment/detachment unit includes a male screw portion which is formed on a lower outer surface of a cylindrical protrusion that protrudes downwardly from the center of the lid body and a female screw portion which is formed on an upper inner surface of the first recessed portion, the second attachment/detachment unit includes a male screw portion which is formed on a lower outer surface of the first recessed portion and a female screw portion which is formed on an upper inner surface of the second recessed portion, the male screw portion and the female screw portion of the first attachment/detachment unit are attachable to or detachable from each other, and the male screw portion and the female screw portion of the second attachment/detachment unit are attachable to or detachable from each other.

32. The anti-overflow pot lid of claim 30, further comprising:
first and second elevatable stoppers configured to be provided in the first and second outlet holes, respectively, of the first and second recessed portions so as to be able to move vertically, and to each include a cross-shaped latch formed at the top of the corresponding stopper and a silicon packing formed at the bottom of the corresponding stopper,
wherein:
in response to the pot body being heated and as a result, the pressure in the pot body increasing, the second elevatable stopper is elevated so that the second outlet hole is closed by the silicon packing of the second elevatable stopper and as a result, steam and bubbles from the pot body can be guided into the second recessed portion through the second inlet hole;
in response to the pressure in the second recessed portion increasing, the first elevatable stopper is elevated so that the first outlet hole is closed by the silicon packing of the first elevatable stopper and as a result, steam and bubbles from the second recessed portion can be guided into the first recessed portion through the first inlet hole; and
in response to the steam and the bubbles in the first recessed portion gradually cooling down and turning to water, the first elevatable stopper is lowered so that the first outlet hole is opened by the silicon packing of the first elevatable stopper and as a result, the water is released into the second recessed portion through the first outlet hole.

33. An anti-overflow pot lid, comprising:
a lid body configured to be curved to protrude, and to cover an opening of a pot body;
a first recessed portion configured to be recessed into the center of the lid body and include a first outlet hole which is formed on one side of the first recessed portion;
an auxiliary lid configured to be formed to protrude from the top of the first recessed portion and include a first inlet hole which is formed on one side of the auxiliary lid;
a first attachment/detachment unit configured to removably couple a lower rim of the auxiliary lid to the center of the first recessed portion;
a second recessed portion configured to surround the first recessed portion and include a second inlet hole which is formed at an upper part of the second recessed portion and through which steam generated in the pot body is introduced into the second recessed portion and a second outlet hole which is formed at the bottom of the second recessed portion and through which water condensed from the steam is released into the pot body; and
a second attachment/detachment unit configured to removably couple and fix the second recessed portion to the first recessed portion.

34. The anti-overflow pot lid of claim 33, wherein the first attachment/detachment unit includes a female screw portion which is formed at the center of the bottom of the first recessed portion and a male screw portion which is formed on a lower outer surface of the auxiliary lid, the second attachment/detachment unit includes a male screw portion which is formed on a lower outer surface of the first recessed portion and a female screw portion which is formed on an upper inner surface of the second recessed portion, the male screw portion and the female screw portion of the first attachment/detachment unit are attachable to or detachable from each other, and the male screw portion and the female screw portion of the second attachment/detachment unit are attachable to or detachable from each other.

35. The anti-overflow pot lid of claim 33, further comprising:
first and second elevatable stoppers configured to be provided in the first and second outlet holes, respectively, of the first and second recessed portions so as to be able to move vertically, and to each include a cross-shaped latch formed at the top of the corresponding stopper and a silicon packing formed at the bottom of the corresponding stopper,
wherein:
in response to the pot body being heated and as a result, the pressure in the pot body increasing, the second elevatable stopper is elevated so that the second outlet hole is closed by the silicon packing of the second elevatable stopper and as a result, steam and bubbles from the pot body can be guided into the second recessed portion through the second inlet hole;
in response to the pressure in the second recessed portion increasing, the first elevatable stopper is elevated so that the first outlet hole is closed by the silicon packing of the first elevatable stopper and as a result, steam and bubbles from the second recessed portion can be guided into the first recessed portion through the first inlet hole;
in response to the steam and the bubbles in the first recessed portion gradually cooling down and turning to water, the first elevatable stopper is lowered so that the first outlet hole is opened by the silicon packing of the first elevatable stopper and as a result, the water is released into the second recessed portion through the first outlet hole; and
in response to the water being released into the second recessed portion, the second elevatable stopper is lowered so that the second outlet hole is opened and as a result, the water is released into the pot body through the second outlet hole.

36. An anti-overflow pot lid, comprising:
a lid body configured to be curved to protrude, and to cover an opening of a pot body;
a first recessed portion configured to be recessed into the center of the lid body and include a first outlet hole which is formed on a side of the first recessed portion;
an auxiliary lid configured to be disposed at the center of the first recessed portion, include a first inlet hole which is formed on a side of the auxiliary lid, and protrude from the top of the first recessed portion;
a first attachment/detachment unit configured to removably couple a lower rim of the auxiliary lid to the center of the first recessed portion;
a second recessed portion configured to be disposed below the first recessed portion and include a second inlet hole which is formed at an upper part of the second recessed portion and through which steam generated in the pot body is introduced into the second recessed portion and a second outlet hole which is formed at the bottom of the second recessed portion and through which water condensed from the steam is released into the pot body; and
a second attachment/detachment unit configured to removably couple and fix an upper rim of the second recessed portion to the first recessed portion.

37. The anti-overflow pot lid of claim 36, wherein the first attachment/detachment unit includes a female screw portion which is formed at the center of the bottom of the first recessed portion and a male screw portion which is formed on a lower outer surface of the auxiliary lid, the second attachment/detachment unit includes a male screw portion which is formed on a lower outer surface of the first recessed portion and a female screw portion which is formed on an upper inner surface of the second recessed portion, the male screw portion and the female screw portion of the first attachment/detachment unit are attachable to or detachable from each other, and the male screw portion and the female screw portion of the second attachment/detachment unit are attachable to or detachable from each other.

38. The anti-overflow pot lid of claim 36, further comprising:
first and second elevatable stoppers configured to be provided in the first and second outlet holes, respectively, of the first and second recessed portions so as to be able to move vertically, and to each include a cross-shaped latch formed at the top of the corresponding stopper and a silicon packing formed at the bottom of the corresponding stopper,
wherein:
in response to the pot body being heated and as a result, the pressure in the pot body increasing, the second elevatable stopper is elevated so that the second outlet hole is closed by the silicon packing of the second elevatable stopper and as a result, steam and bubbles from the pot body can be guided into the second recessed portion through the second inlet hole;
in response to the pressure in the second recessed portion increasing, the first elevatable stopper is elevated so that the first outlet hole is closed by the silicon packing of the first elevatable stopper and as a result, steam and bubbles from the second recessed portion can be guided into the first recessed portion through the first inlet hole;
in response to the steam and the bubbles in the first recessed portion gradually cooling down and turning to water, the first elevatable stopper is lowered so that the first outlet hole 340 is opened by the silicon packing of the first elevatable stopper and as a result, the water is released into the pot body through the first outlet hole; and
in response to the steam and bubbles in the second recessed portion gradually cooling down and turning to water, the second elevatable stopper is lowered so that the second outlet hole is opened and as a result, the water is released into the pot body through the second outlet hole.

39. An anti-overflow pot lid, comprising:
a lid body configured to be curved to protrude, and to cover an opening of a pot body;
an upper recessed portion configured to be recessed into the center of the lid body;
a lower recessed portion configured to be disposed below the upper recessed portion and include a plurality of inlet holes which are formed at an upper part of the lower recessed portion and through which steam generated in the pot body is introduced into the lower recessed portion and an outlet hole which is formed at the bottom of the lower recessed portion and through which water condensed from the steam is released into the pot body;
an attachment/detachment unit configured to removably couple and fix an upper rim of the lower recessed portion to the upper recessed portion; and
a rotation unit configured to include a plurality of wings which are rotated by steam introduced into the lower recessed portion through the inlet holes and a screw which is rotated by the rotation force of the wings and pushes any water in the lower recessed portion toward the outlet hole so as for the water to be discharged.

40. The anti-overflow pot lid of claim 39, wherein the attachment/detachment unit includes a male screw portion which is formed a lower outer surface of the first recessed portion and a female screw portion which is formed on an upper inner surface of the second recessed portion, the female screw portion and the male screw portion are attachable to or detachable from each other, a vertical axial member to which the wings and the screw are both coupled is rotatably coupled to an inner bearing of a fitting unit, which is provided at the center of the upper recessed portion, so that due to the pressure of steam introduced into the lower recessed portion through the inlet holes, the wings and the screw are rotated at the same time so as to push water in the lower recessed portion toward the outlet hole and thus to discharge the water into the pot body.

41. The anti-overflow pot body of claim 40, wherein the lower recessed portion is formed as a hollow tube having a first diameter portion in which the wings are disposed and a second diameter portion in which the screw is disposed, and the diameter of the first diameter portion is greater than the diameter of the second diameter portion.

42. The anti-overflow pot lid of claim 40, wherein the lower recessed portion is formed as a cylinder having a first diameter portion in which the wings are disposed and a second diameter portion in which the screw is disposed, and the diameter of the first diameter portion is the same as the diameter of the second diameter portion.

43. An anti-overflow pot lid, comprising:
a lid body configured to be curved to protrude, and to cover an opening of a pot body;
an upper recessed portion configured to be recessed into the center of the lid body;
a lower recessed portion configured to be disposed below the upper recessed portion and include a plurality of inlet holes which are formed at an upper part of the lower recessed portion and through which steam generated in the pot body is introduced into the lower recessed portion and an outlet hole which is formed at the bottom of the lower recessed portion and through which water condensed from the steam is released into the pot body;
an attachment/detachment unit configured to removably couple and fix an upper rim of the lower recessed portion to the upper recessed portion;
a rotation unit configured to include a plurality of wings which are rotated by steam introduced into the lower recessed portion through the inlet holes and a screw which is rotated by the rotation force of the wings and pushes any water in the lower recessed portion toward the outlet hole so as for the water to be discharged; and
a driving unit configured to include a motor which uses power to rotate a vertical axial member to which the wings and the screw are both coupled.

44. The anti-overflow pot lid of claim 43, wherein the attachment/detachment unit includes a male screw portion which is formed a lower outer surface of the first recessed portion and a female screw portion which is formed on an upper inner surface of the second recessed portion, the female screw portion and the male screw portion are attachable to or detachable from each other, the vertical axial member is rotatably coupled to an axial member of the motor, and the driving unit further includes a housing which is removably screw-coupled to the center of the upper recessed portion.

45. The anti-overflow pot lid of claim 43, wherein the driving unit further includes a housing which is bent in an L shape and thus forms a handle, a battery is embedded in the housing and is electrically connected to the motor via a switch so that the wings and the screw can be rotated in a power-driven manner motor by manipulating the switch to drive the motor.
